# FASCICULE DE BREVET EUROPEEN

(11) **EP 1 718 567 B1**
(45) Date de publication et mention de la délivrance du brevet: **13.09.2017**
(21) Numéro de dépôt: 05717638.0
(22) Date de dépôt: 16.02.2005
(51) Int. Cl.: C01G 31/00, H01M 4/131, H01M 4/136, H01M 4/485, H01M 10/052

(54) **PROCEDE DE PREPARATION D'UN OXYDE DE LITHIUM ET DE VANADIUM DU TYPE LI(1+A)V3O8**
VERFAHREN ZUR HERSTELLUNG EINES LITHIUM-VANADIUM-OXIDS DES TYPS LI(1+A)V3O8
METHOD FOR PREPARING A LITHIUM AND VANADIUM OXIDE

(30) Priorité: 23.02.2004 FR 0401799
(43) Date de publication de la demande: 08.11.2006
(73) Titulaire: Blue Solutions, 29500 Ergué Gabéric (FR); Centre National de la Recherche Scientifique (C.N.R.S.), 75016 Paris (FR)
(72) Inventeur: GUYOMARD, Dominique, F-44880 Sautron (FR); DUBARRY, Matthieu, 96815 Honolulu, HI (US); DESCHAMPS, Marc, F-29000 Quimper (FR); GAUBICHER, Joel, F-44000 Nantes (FR)
(74) Mandataire: Goulard, Sophie
(86) Numéro de dépôt international: PCT/FR2005/000357
(87) Numéro de publication internationale: WO 2005/090237

(56) Documents cités:
- EP-A- 0 397 608
- WO-A-2004/024631
- J. XIE, J. LI, H. ZHAN, Y. ZHOU: "Low-Temperature Sol-Gel Synthesis of Li1.2V3O8 from V2O5 Gel" MATERIALS LETTERS, vol. 57, 2003, pages 2682-2687, XP002306017 cité dans la demande
- B. ALONSO, J. LIVAGE: "Synthesis of Vanadium Oxide Gels from Peroxovanadic ACid olutions : A51-V NMR Study" J. SOLID STATE CHEM., vol. 148, 1999, pages 16-19, XP002359453
- C.J. FONTENOT, J.W. WIENCH, M. PRUSKI, G.L. SCHRADER: "Vanadia Gel Synthesis via Peroxovanadate Precursors. 1. In Situ laser Raman and 51-V NMR Characterization of the Gelation Process" J. PHYS. CHEM. B, vol. 104, 2000, pages 11622-11631, XP002359454
- PISTOIA G ET AL: "LI/LI1+XV3O8 SECONDARY BATTERIES" JOURNAL OF THE ELECTROCHEMICAL SOCIETY, ELECTROCHEMICAL SOCIETY. MANCHESTER, NEW HAMPSHIRE, US, vol. 137, no. 8, 1 août 1990 (1990-08-01), pages 2365-2370, XP000231200 ISSN: 0013-4651 cité dans la demande
- PATENT ABSTRACTS OF JAPAN vol. 2003, no. 12, 5 décembre 2003 (2003-12-05) & JP 2004 010445 A (NATIONAL INSTITUTE FOR MATERIALS SCIENCE), 15 janvier 2004 (2004-01-15)
- PATENT ABSTRACTS OF JAPAN vol. 018, no. 506 (C-1252), 22 septembre 1994 (1994-09-22) & JP 06 171947 A (MITSUI TOATSU CHEM INC), 21 juin 1994 (1994-06-21)

## Description

La présente invention concerne un procédé de préparation d'un oxyde de lithium et de vanadium, ainsi que le produit obtenu.

Les propriétés principales recherchées pour un matériau destiné à être utilisé comme matière active de cathode dans une batterie au lithium sont une énergie spécifique (qui est le produit de la capacité par le potentiel moyen) élevée et une longue durée de vie en cyclage. Le matériau Li_{1+α}V₃O₈, (0,1 ≤ α ≤ 0,25), répond à ces critères et de nombreux procédés de préparation sont décrits dans l'art antérieur.

Il est connu notamment de préparer Li_{1+α}V₃O₈ à partir de Li₂CO₃ et de V₂O₅ sous forme de poudre.

Hammou, et al. [Electrochim. Acta, 13 (1988) 1719] décrit un procédé pour la préparation de Li_{1+α}V₃O₈ dans lequel les réactifs réagissent à l'air pendant 6 h à 590°C. Cette température est cependant très proche de la température de fusion et il en résulte un frittage de la poudre qu'il est nécessaire de broyer avant de l'utiliser pour la préparation d'une électrode composite.

US-6,136,476 décrit un procédé dans lequel les réactifs sont chauffés à une température inférieure à la température de fusion, de préférence entre 350°C et 550°C, après avoir mélangé les réactifs à l'aide de divers moyens en vue de réduire la dimension de particules et d'homogénéiser la distribution de la taille des grains.

Chaloner-Gill, et al [J. Electrochem. Soc., 147, (10) 3575-3578 (2000)] décrit un procédé comportant une succession d'étapes, à savoir : broyage du mélange de réactifs, chauffage à l'air à 585°C pendant 16 h, refroidissement et rebroyage, second chauffage à l'air à 585°C pendant 16 h, réaction avec Li₂S.

US-5,520,903 décrit un procédé consistant à broyer les réactifs en vue de le mélanger et de réduire la dimension des grains, à compresser pour former une poudre compacte, puis à chauffer le mélange compressé à une température entre 580 et 585°C. Dans ce cas, le produit obtenu est un agglomérat de grains monocristallins soudés entre eux qu'il est nécessaire de broyer avant de l'utiliser comme matériau d'électrode. Le broyage donne certes des grains libres, mais il provoque également la perte de la morphologie mono-cristalline en bâtonnets et des grains polycristallins écrasés sont obtenus.

FR-2 831 715 décrit un procédé consistant à mélanger les précurseurs en poudre dans des proportions stoechiométriques, dans des conditions qui donnent une densité inférieure à 1,5 et des dimensions de grains dans des fourchettes précises, à chauffer à une température entre 565°C et 585°C que l'on maintient pendant 30 min à 10 h, puis à désagglomérer la poudre obtenue.

De manière générale, les procédés précités pour la préparation de Li_{1+α}V₃O₈ sont longs et, à cause du traitement thermique à haute température, les grains sont relativement gros, ce qui est défavorable à leur utilisation comme matériau d'électrode positive pour batteries au lithium.

D'autres procédés, mettant en oeuvre des précurseurs gélifiés, ont également été étudiés.

Par G. Pistoia, et al., [J. Electrochem. Soc., 137, 2365 (1990)], on connaît un procédé de préparation d'un précurseur gélifié de Li_{1+α}V₃O₈ (0,1≤α≤0,25), par dissolution de V₂O₅-α dans une solution aqueuse de LiOH et par chauffage à 50°C sous atmosphère d'azote. Le gel se forme après plusieurs dizaines d'heures.

Par Jinggang Xie, et al., [Mat. Letters., 57, 2682 (2003)], on connaît un procédé de préparation d'un gel de LiV₃O₈ par addition d'une poudre de LiOH, H₂O à un gel de V₂O₅ préparé au préalable par polycondensation d'acide vanadique. L'acide est lui même obtenu par passage d'une solution de métavanadate de sodium, NaVO₃, à travers une colonne échangeuse d'ion H⁺/Na⁺. L'ensemble du processus comprend un grand nombre d'étapes qui se déroulent sur plusieurs dizaines d'heures, avec une utilisation de résine échangeuse d'ions qui est fastidieuse et onéreuse.

JP2004010445 décrit un procédé d'un oxyde de Li-V par voie humide selon lequel du vanadium ou un composé de vanadium et un composé de lithium sont mis à réagir avec du peroxyde d'hydrogène en solution.

Par ailleurs B. Alonso et al. (J. Solid State Chem., 1999, 148, 16-19) et C. J. Fontenot et al. (J. Phys. Chem. B2000, 104, 11622-11631) décrivent la préparation d'un gel de V₂O₅ par réaction de V₂O₂ avec du peroxyde d'hydrogène en milieu aqueux.

Les divers procédés de préparation d'oxyde de Li et de V à partir de précurseurs gélifiés comprennent de nombreuses étapes dont certaines sont fastidieuses. En outre, les pré curseurs utilisés sont souvent onéreux et leur utilisation est délicate, notamment en raison de leur toxicité.

Le but de la présente invention est de fournir un procédé simple et rapide pour la préparation d'un oxyde de lithium et de vanadium Li_{1+α}V₃O₈ (0,1 ≤ α ≤ 0,25), ainsi que le produit obtenu par ledit procédé.

Le procédé selon la présente invention consiste à préparer un gel précurseur, puis à soumettre ledit gel à un traitement thermique, ledit procédé étant caractérisé en ce que le gel précurseur est préparé en ajoutant simultanément un précurseur de lithium et l'oxyde V₂O₅-α à une solution aqueuse de peroxyde d'hydrogène, en laissant réagir le peroxyde d'hydrogène avec V₂O₅-α, et en ce que le traitement thermique est effectuée sous atmosphère oxydante à une température entre 260°C et 580°C.

Le précurseur de lithium peut être choisi parmi LiOH, H₂O, LiCl, LiNO₃, ou un sel de lithium d'un acide carboxylique, choisi par exemple parmi l'acétylacétonate de lithium, l'acétate de lithium, le stéarate de lithium, le formiate de lithium, l'oxalate de lithium, le citrate de lithium, le lactate de lithium, le tartrate de lithium, le pyruvate de lithium. Parmi les sels d'acide carboxylique, les sels dont l'anion a une courte chaîne sont préférés, pour éviter les phénomènes de réduction de Li_{1+α}V₃O₈ lors du traitement thermique.

Le précurseur de lithium est introduit sous forme de poudre dans le milieu réactionnel. Le début de formation du gel s'observe dès 3 min après l'addition de V₂O₅-α à la solution de peroxyde. Le gel est complètement formé après un mûrissement d'environ 30 min.

Le précurseur de lithium peut être un produit du commerce, utilisable sans broyage préliminaire.

La durée du traitement thermique est comprise entre environ 10 min et environ 10 heures. Si la durée est inférieure à 10 min, il reste de l'eau résiduelle dans le composé final. Une durée de 10 heures est suffisante pour obtenir la taille maximale des grains de Li_{1+α}V₃O₈.

Les quantités respectives de précurseur de Li et de V₂O₅-α dans le milieu réactionnel sont de préférence telles que :
- 0,16 mol.l⁻¹ < [Li] < 0,55 mol.l⁻¹
- 0,22 mol.l⁻¹ < [V₂O₅] < 0,75 mol.l⁻¹
- 1,15 < [V₂O₅] / [Li] < 1,5

La concentration en peroxyde d'hydrogène dans le milieu réactionnel est comprise entre 10% et 50% en volume.

Lorsque le rapport [V₂O₅] / [Li] est compris dans l'intervalle précité, on obtient un gel contenant uniquement LiV₃O₈, alors qu'un excès de V₂O₅ ou de précurseur de Li donne un gel contenant en outre soit V₂O₅, soit LiVO₃. Des concentrations trop élevées en réactifs peuvent provoquer une effervescence, alors que des concentrations trop faibles donnent des précipités, et non pas des gels.

Le composé obtenu par le procédé de l'invention répond à la formule Li_{1+α}V₃O₈, (0,1 ≤ α ≤ 0,25) et il est constitué de grains en forme d'aiguilles présentant une répartition bimodale, les aiguilles d'un premier mode ayant une longueur L de 10 à 50 µm, les aiguilles d'un second mode ayant une longueur L de 1 à 10 µm. Si ℓ est la largeur des grains, L leur longueur et e leur épaisseur, ces dimensions sont telles que 4<L/ℓ<100 et 4<L/e<100. Le procédé selon l'invention permet d'obtenir le composé Li_{1+α}V₃O₈ sous une forme pure. L'analyse par diffraction des rayons X confirme l'absence de traces d'impuretés, notamment de V₂O₅.

Un composé Li_{1+α}V₃O₈ selon la présente invention peut être avantageusement utilisé comme matière active pour l'électrode positive d'une batterie rechargeable, qui constitue un autre objet de la présente invention.

Dans un mode de réalisation particulier, une électrode positive selon la présente invention est constituée par un matériau composite qui contient :
- un composé Li_{1+α}V₃O₈ obtenu par le procédé de la présente invention, comme matière active,
- un matériau conférant une conduction électronique
- un liant conférant une tenue mécanique
- éventuellement un composé conférant une conduction ionique.

La teneur en matière active du matériau composite de l'électrode positive est comprise de préférence entre 40 et 90% en masse, plus particulièrement entre 80 et 90% en masse. La teneur en matériau conférant une conduction électronique est comprise de préférence entre 5 et 20% en masse, plus particulièrement entre 10 et 15% en masse. La teneur en liant est comprise de préférence entre 5 et 15 % en masse. La teneur en composé conférant une conduction ionique est de préférence inférieure à 15% en masse. Elle peut être nulle.

Le liant du matériau composite de l'électrode positive peut être constitué par un polymère non solvatant. Le polymère non solvatant peut être choisi parmi les homopolymères et les copolymères de fluorure de vinylidène, les copolymères d'éthylène, de propylène et d'un diène, les homopolymères et les copolymères de tétrafluoroéthylène, les homopolymères et les copolymères de N-vinylpyrrolidone, les homopolymères et les copolymères d'acrylonitrile et les homopolymères et les copolymères de méthacrylonitrile. Le poly(fluorure de vinylidène) est particulièrement préféré. Le polymère non solvatant peut porter des fonctions ioniques. A titre d'exemple d'un tel polymère, on peut citer les sels de polyperfluoroéther sulfonate, dont certains sont commercialisés sous la dénomination Nafion^{®}, et les sels de polystyrène sulfonate.

Le liant du matériau composite de l'électrode positive peut en outre être un polymère solvatant. Il peut être choisi par exemple parmi les polyéthers de structure linéaire, peigne ou à blocs, formant ou non un réseau, à base de poly-(oxyde d'éthylène) ; les copolymères contenant le motif oxyde d'éthylène ou oxyde de propylène ou allylglycidyléther ; les polyphosphazènes ; les réseaux réticulés à base de polyéthylène glycol réticulé par des isocyanates ; les copolymères d'oxyéthylène et d'épichlorhydrine ; et les réseaux obtenus par polycondensation et portant des groupements qui permettent l'incorporation de groupements réticulables.

Le liant du matériau composite de l'électrode positive peut en outre être un mélange de polymère solvatant et de polymère non solvatant.

Un ou plusieurs composés polaires aprotiques peuvent être ajouté au matériau composite constituant l'électrode positive. Ces composés peuvent être choisis parmi les carbonates linéaires ou cycliques, les éthers linéaires ou cycliques, les esters linéaires ou cycliques, les sulfones linéaires ou cycliques, les sulfamides et les nitriles.

Le composé conférant des propriétés de conduction électronique au matériau constituant l'électrode positive est de préférence un noir de carbone qui ne catalyse pas l'oxydation de l'électrolyte à potentiel élevé. De nombreux noirs de carbone du commerce répondent à cette condition. On peut citer en particulier le composé Ensagri Super S^{®} commercialisé par la société Chemetals.

Le composé conférant une conduction ionique au matériau constituant l'électrode positive est de préférence un sel de lithium, choisi avantageusement parmi LiClO₄, LiPF₆, LiAsF₆, LiBF₄, LiR_{F}SO₃, LiCH₃SO₃, les bisperfluoroalkyl sulfonimidures de lithium, les bis- ou les trisperfluorosulfonylméthides de lithium.

Une électrode positive composite selon l'invention peut être élaborée en mélangeant la matière active et le noir de carbone dans une solution du liant dans un solvant approprié, en épandant le mélange obtenu sur un disque métallique servant de collecteur (par exemple un disque d'aluminium), puis en évaporant le solvant. Le solvant est choisi en fonction du liant utilisé.

Une électrode positive selon l'invention peut aussi être élaborée par extrusion d'un mélange de ses constituants.

Une électrode ainsi constituée peut être utilisée dans une batterie comprenant une électrode positive et une électrode négative séparée par un électrolyte comprenant un sel de lithium en solution dans un solvant. Le fonctionnement d'une telle batterie est assuré par la circulation réversible d'ions lithium dans l'électrolyte entre les électrodes. L'un des objets de la présente invention est une batterie dans laquelle l'électrolyte comprend un sel de lithium en solution dans un solvant, caractérisée en ce qu'elle comprend une électrode positive contenant comme matière active le composé Li_{1+α}V₃O₈ préparé selon le procédé de la présente invention. Lors de l'assemblage de la batterie, on utilise pour constituer l'électrode positive, un oxyde Li_{1+α}V₃O₈ (0,1 ≤ α ≤ 0,25), la batterie ainsi constituée se trouvant à l'état chargé.

Dans une batterie selon l'invention, l'électrolyte comprend au moins un sel de lithium en solution dans un solvant. Comme exemple de sel, on peut citer LiClO₄, LiAsF₆, LiPF₆, LiBF₄, LiR_{F}SO₃, LiCH₃SO₃, LiN(R_{F}SO₂)₂, LiC(R_{F}SO₂)₃ et LiCF(R_{F}SO₂)₂, R_{F} représentant un groupe perfluoroalkyle ayant de 1 à 8 atomes de carbone ou un atome de fluor.

Le solvant de l'électrolyte peut être constitué par un ou plusieurs composés polaires aprotiques choisis parmi les carbonates linéaires ou cycliques, les éthers linéaires ou cycliques, les esters linéaires ou cycliques, les sulfones linéaires ou cycliques, les sulfamides et les nitriles. Le solvant est constitué de préférence par au moins deux carbonates choisis parmi le carbonate d'éthylène, le carbonate de propylène, le carbonate de diméthyle, le carbonate de diéthyle et le carbonate de méthyle et d'éthyle.

Le solvant de l'électrolyte peut en outre être un polymère solvatant. Comme exemples de polymères solvatants, on peut citer les polyéthers de structure linéaire, peigne ou à blocs, formant ou non un réseau, à base de poly(oxyde d'éthylène) ; les copolymères contenant le motif oxyde d'éthylène ou oxyde de propylène ou allylglycidyléther ; les polyphosphazènes ; les réseaux réticulés à base de polyéthylène glycol réticulé par des isocyanates ; les copolymères d'oxyéthylène et d'épichlorhydrine tels que décrits dans FR-9712952 ; et les réseaux obtenus par polycondensation et portant des groupements qui permettent l'incorporation de groupements réticulables. On peut également citer les copolymères à blocs dans lesquels certains blocs portent des fonctions qui ont des propriétés rédox.

Le solvant de l'électrolyte peut en outre être un mélange d'un composé liquide aprotique polaire choisi parmi les composés polaires aprotiques cités ci-dessus et d'un polymère solvatant. Il peut comprendre de 2 à 98% en volume de solvant liquide, suivant que l'on souhaite un électrolyte plastifié avec une faible teneur en composé aprotique polaire, ou un électrolyte gélifié avec une teneur élevée en composé aprotique polaire. Lorsque le solvant polymère de l'électrolyte porte des fonctions ioniques, le sel de lithium est facultatif.

Le solvant de l'électrolyte peut aussi être un mélange d'un composé polaire aprotique tel que défini ci-dessus ou d'un polymère solvatant tel que défini ci-dessus, et d'un polymère polaire non solvatant comprenant des unités contenant au moins un hétéroatome choisi parmi le soufre, l'oxygène, l'azote et le fluor. Un tel polymère non solvatant peut être choisi parmi les homopolymères et les copolymères d'acrylonitrile, les homopolymères et les copolymères de fluorovinylidène, et les homopolymères et les copolymères de N-vinylpyrrolidone. Le polymère non solvatant peut en outre être un polymère portant des substituants ioniques, et notamment un sel de polyperfluoroéther sulfonate (tel qu'un Nafion^{®} précité par exemple) ou un sel de polystyrène sulfonate.

Dans un autre mode de réalisation, l'électrolyte de la batterie de la présente invention peut être un solide conducteur inorganique, choisi parmi les composés désignés habituellement par Lisicon, c'est-à-dire des solutions solides Li₄XO₄-Li₃YO₄ (X = Si ou Ge ou Ti ; Y = P ou As ou V), Li₄XO₄-Li₂AO₄ (X = Si ou Ge ou Ti ; A = Mo ou S), Li₄XO₄-LiZO₂ (X = Si ou Ge ou Ti ; Z = Al ou Ga ou Cr), Li₄XO₄-Li₂BXO₄ (X = Si ou Ge ou Ti ; B = Ca ou Zn), LiO₂-GeO₂-P₂O₅, LiO₂-SiO₂-P₂O₅, LiO₂-B₂O₃-Li₂SO₄, LiF-Li₂S-P₂S₅, Li₂O-GeO₂-V₂O₅ ou LiO₂-P₂O₅-PON.

Bien entendu, l'électrolyte d'une batterie de la présente invention peut contenir en outre les additifs utilisés de manière classique dans ce type de matériau, et notamment un plastifiant, une charge, d'autres sels, etc.

L'électrode négative de la batterie peut être constituée par du lithium métallique ou un alliage de lithium qui peut être choisi parmi les alliages β-LiAl, γ-LiAl, Li-Pb (par exemple Li₇Pb₂), Li-Cd-Pb, Li-Sn, Li-Sn-Cd, Li-Sn dans différentes matrices, notamment des matrices oxygénées ou des matrices métalliques (par exemple Cu, Ni, Fe, Fe-C), Li-Al-Mn.

L'électrode négative de la batterie peut en outre être constituée par un matériau composite comprenant un liant et un matériau capable d'insérer de manière réversible des ions lithium à bas potentiel rédox (désigné ci-après par matériau d'insertion), ledit matériau composite étant lithié au cours d'une étape préliminaire. Le matériau d'insertion peut être choisi parmi les matériaux carbonés, naturels ou de synthèse. Ces matériaux carbonés peuvent être par exemple un coke de pétrole, un graphite, un whisker de graphite, une fibre de carbone, un méso carbone micro grains, (désigné usuellement par meso carbon micro bead), un coke de brai (désigné usuellement par pitch coke), un coke aiguille (désigné usuellement par needle coke). Le matériau d'insertion peut en outre être choisi parmi les oxydes tels que par exemple LiₓMoO₂, LiₓWO₂, LiₓFe₂O₃, Li₄Ti₅O₁₂, LiₓTiO₂ ou parmi les sulfures tels que par exemple Li₉Mo₆S₆ et LiTiS₂ ou parmi les oxysulfures. On peut également utiliser des composés permettant de stocker réversiblement le lithium à bas potentiel, tels que des vanadates amorphes (par exemple LiₓNiVO₄), les nitrures (par exemple Li_{2,6-x}Co_{0,4}N, Li₂₊ₓFeN₂, Li₇₊ₓMnN₄), les phosphures (par exemple Li₉₋ₓVP₄), les arséniures (par exemple Li₉₋ₓVAs₄) et les oxydes à décomposition réversible (par exemple CoO, CuO, Cu₂O). Le liant est un liant organique stable électrochimiquement dans le domaine de fonctionnement de l'électrode négative. A titre d'exemple, on peut citer les homopolymères du fluorure de polyvinylidène ou un copolymère éthylène propylène diène. Un poly(fluorure de polyvinylidène) est particulièrement préféré. Une électrode composite négative peut être élaborée en introduisant le composé carboné dans une solution du liant dans un solvant polaire aprotique, en épandant le mélange obtenu sur un disque de cuivre servant de collecteur, puis en évaporant le solvant à chaud sous atmosphère d'azote.

Une batterie selon l'invention comprenant un électrolyte solide peut se présenter sous la forme d'une succession de couches constituées respectivement par le matériau de l'électrode positive selon l'invention et son collecteur de courant, l'électrolyte solide, et l'électrode négative et éventuellement son collecteur de courant.

Une batterie selon l'invention comprenant un électrolyte liquide peut également se présenter sous forme d'une succession de couches constituées respectivement par le matériau de l'électrode positive selon l'invention et son collecteur de courant, un séparateur imbibé par l'électrolyte liquide, et le matériau constituant l'électrode négative et éventuellement son collecteur de courant.

La présente invention est illustrée plus en détail par les exemples donnés ci-après auxquels elle n'est cependant pas limitée.

### Exemple 1

### Préparation de Li_{1+α}V₃O₈ à partir de LiOH, H₂O

On a préparé un composé Li_{1+α}V₃O₈ en ajoutant LiOH, H₂O et V₂O₅-α en poudre à 25 ml d'une solution aqueuse de H₂O₂ à 30% dans un becher de 1 1 sous agitation magnétique.

Plusieurs échantillons ont été préparés en faisant varier, lors de l'étape de préparation du précurseur gélifié, le moment de l'addition de V₂O₅-α, de LiOH, H₂O, ainsi que la concentration de la solution de V₂O₅ [V₂O₅] en mol.l⁻¹. Les conditions particulières des différents essais sont indiquées dans le tableau ci-dessous.

| Echantillon | [V₂O₅] mol/l | [LiOH,H₂O] mol/l | Addition de V₂O₅ après | Addition du sel de Li après | précurseur gélifié obtenu |
|---|---|---|---|---|---|
| 1a | 0,75 | 0,55 | 0 min | 0 min | Gel LiV₃O₈ |
| 1a' | 0,75 | 0,55 | 1 min | 0 min | Gel LiV₃O₈ |
| 1a" | 0,22 | 0,16 | 0 min | 1 min | Gel LiV₃O₈ |
| 1b | 0,22 | 0,16 | 0 min | 3 min | Gel LiV₃O₈ + gel LiₓV₂O₅ |
| 1c | 0,22 | 0,16 | 0 min | 20 min | Gel LiV₃O₈ + gel Li_{X}V₂O₅ |

L'échantillon 1b correspond à une addition de LiOH, H₂O à un gel en cours de formation. L'échantillon 1c correspond à une addition de LiOH, H₂O à un gel déjà formé.

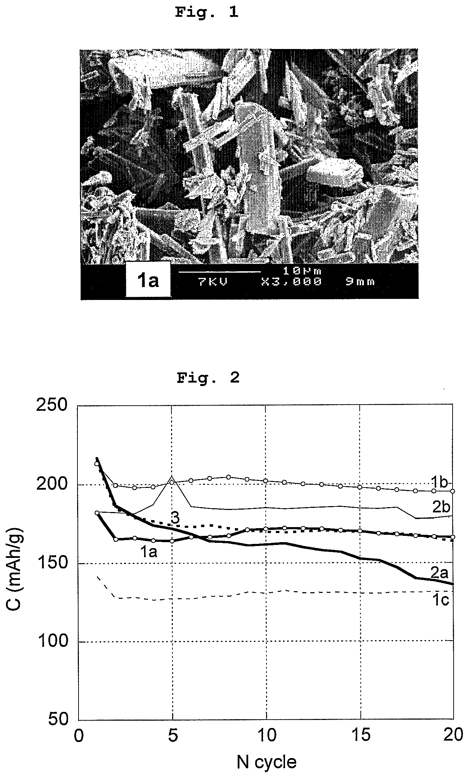

Pour chaque échantillon de gel obtenu, le traitement thermique a consisté à effectuer un chauffage à l'air à 580°C pendant 10 heures. La figure 1 représente une micrographie obtenue avec un microscope électronique à balayage de type JEOL JSM 6400F de l'échantillon 1b après recuit. Il montre que le produit obtenu est constitué d'aiguilles dont les dimensions ont une répartition bimodale.

### Exemple 2

On a reproduit le mode opératoire de l'exemple 1, pour préparer trois échantillons en remplaçant LiOH, H₂O respectivement par LiCl (échantillon 2a), LiNO₃ (échantillon 2b) et l'acétate de Li (échantillon 2c).

On a utilisé une solution aqueuse à 30% en volume de peroxyde contenant 0,22 mol.l⁻¹ de V₂O₅, puis on a ajouté le sel de lithium après 3 min. Dans chaque cas, on a obtenu un gel de LiV₃O₈ après environ 30 min.

A chaque échantillon de précurseur gélifié, on a appliqué un traitement thermique similaire à celui de l'exemple 1.

### Exemple 3

Les composés LiV₃O₈ obtenus après traitement thermique dans les exemples 1 et 2 ont été utilisés comme matière active d'électrode positive et leurs performances ont été testées en batterie swagelok de laboratoire du type : Li/ électrolyte liquide (EC+DMC+LiPF₆) / (Li₁₊ₓV₃O₈ + carbone + liant), fonctionnant à température ambiante.

Les résultats obtenus pour les différents échantillons sont indiqués sur la figure 2.

La courbe 1c du produit Jinggang Xie, avec addition tardive de précurseur de lithium à un gel déjà formé, montre les moins bons résultats. La capacité du produit reste constante au cours des cycles, mais elle reste à un niveau faible, de l'ordre de 130 mAh/g.

La courbe 2a correspond à un composé obtenu par le procédé de l'invention qui n'est pas stable en cyclage.

Pour les courbes 1a, 1b, 2a, et 2b obtenues à partir de composés préparés selon le procédé proposé, on note que les capacités délivrées sont similaires et de l'ordre de 180 mAh/g à un régime de décharge et de charge de 1 Li/2,5h et 1 Li/5h respectivement entre 3,7 V et 2 V. Ces résultats sont similaires à ceux obtenus par la technique Pistoia (courbe 3).

## Revendications

1. Procédé pour la préparation d'un composé Li_{1+α}V₃O_{8,} (0,1 ≤ α ≤ 0,25) consistant à préparer un gel précurseur, puis à soumettre ledit gel à un traitement thermique, **caractérisé en ce que** le gel précurseur est préparé en ajoutant simultanément un précurseur de lithim et l'oxyde V₂O₅-α à une solution aqueuse de peroxyde d'hydrogène, en laissant réagir le peroxyde d'hydrogène avec V₂O₅-α, et **en ce que** le traitement thermique est effectué sous atmosphère oxydante à une température entre 260°C et 580°C.

2. Procédé selon la revendication 1, **caractérisé en ce que** le précurseur de lithium est choisi parmi LiOH, H₂O, LiCl, LiNO₃, ou un sel de lithium d'un acide carboxylique.

3. Procédé selon la revendication 2, **caractérisé en ce que** le sel de lithium d'acide carboxylique est choisi parmi l'acétylacétonate de lithium, l'acétate de lithium, le stéarate de lithium, le formiate de lithium et l'oxalate de lithium.

4. Procédé selon la revendication 1, **caractérisé en ce que** le précurseur de lithium est introduit sous forme de poudre dans le milieu réactionnel.

5. Procédé selon la revendication 1, **caractérisé en ce que** la durée du traitement thermique est comprise entre 10 min et 10 heures.

6. Procédé selon la revendication 1, **caractérisé en ce que** les quantités respectives de précurseur de Li et de V₂O₅-α dans le milieu réactionnel sont telles que :
- 0,16 mol.l⁻¹ < [Li] < 0,55 mol.l⁻¹
- 0,22 mol.l⁻¹ < [V₂O₅] < 0,75 mol.l⁻¹
- 1,15 < [V₂O₅] / [Li] < 1,5.

7. Procédé selon la revendication 1, **caractérisé en ce que** la concentration en peroxyde d'hydrogène dans le milieu réactionnel est comprise entre 10% et 50% en volume.

8. Composé de formule Li_{1+α}V₃O₈, (0,1<α<0,25) constitué de grains en forme d'aiguilles qui présentent une répartition bimodale et qui ont une largeur ℓ, une longueur L et une épaisseur e telles que :
- les aiguilles d'un premier mode ont une longueur L de 10 à 50 µm,
- les aiguilles d'un second mode ont une longueur L de 1 à 10 µm,
- 4<L/ℓ<100 et 4L/e<100.

9. Electrode positive pour batterie au lithium, **caractérisée en ce qu'**elle contient comme matière active un composé Li_{1+α}V₃O₈ selon la revendication 8.

10. Electrode positive selon la revendication 9, **caractérisée en ce qu'**elle contient en outre :
• un liant conférant une tenue mécanique
• un matériau conférant une conduction électronique
• éventuellement un composé conférant une conduction ionique.

11. Electrode positive selon la revendication 10, **caractérisée en ce que** :
- la teneur en matière active est comprise entre 40 et 90 % en masse ;
- la teneur en liant est de 5 à 15 % en masse ;
- la teneur en matériau conférant une conduction électronique est de 5 à 20% en masse ;
- la teneur en composé conférant une conduction ionique est inférieure à 15 % en masse.

12. Electrode composite positive selon la revendication 10, **caractérisée en ce que** le matériau conférant une conduction électronique est un noir de carbone.

13. Electrode selon la revendication 10, **caractérisé en ce que** le liant est constitué par un polymère non solvatant, un polymère solvatant, ou un mélange des deux.

14. Electrode selon la revendication 13, **caractérisée en ce que** le liant contient en outre un composé polaire aprotique.

15. Electrode selon la revendication 10, **caractérisée en ce que** le composé conférant une conduction ionique est un sel de lithium, choisi parmi LiClO₄, LiPF₆, LiAsF₆, LiBF₄, LiR_{F}SO₃, LiCH₃SO₃, les bisperfluoroalkyl sulfonimidures de lithium, les bis- et les trisperfluorosulfonylméthides de lithium.

16. Batterie comprenant une électrode positive et une électrode négative séparée par un électrolyte comprenant un sel de lithium en solution dans un solvant, **caractérisée en ce que** l'électrode positive est une électrode selon l'une des revendications 9 à 15.

## Patentansprüche

1. Verfahren zur Herstellung einer Verbindung Li_{1+α}V₃O₈ (0,1 ≤ α ≤0,25), das darin besteht, ein Vorläufergel herzustellen, dann das Gel einer thermischen Behandlung zu unterziehen, **dadurch gekennzeichnet, dass** das Vorläufergel durch gleichzeitiges Hinzufügen eines Lithiumvorläufers und von Oxid V₂O₅-α zu einer wässrigen Wasserstoffperoxidlösung durch Reagierenlassen des Wasserstoffperoxids mit dem V₂O₅-α hergestellt wird, und dass die thermische Behandlung unter oxidativer Atmosphäre bei einer Temperatur zwischen 260 °C und 580 °C durchgeführt wird.

2. Verfahren nach Anspruch 1, **dadurch gekennzeichnet, dass** der Lithiumvorläufer aus LiOH,H₂O, LiCl, LiNO₃ oder einem Lithiumsalz einer Carboxylsäure ausgewählt ist.

3. Verfahren nach Anspruch 2, **dadurch gekennzeichnet, dass** das Lithiumsalz der Carboxylsäure aus dem Lithiumacetylacetonat, dem Lithiumacetat, dem Lithiumstearat, dem Lithiumformiat und dem Lithiumoxalat ausgewählt ist.

4. Verfahren nach Anspruch 1, **dadurch gekennzeichnet, dass** der Lithiumvorläufer in das Reaktionsmilieu in Pulverform eingeleitet wird.

5. Verfahren nach Anspruch 1, **dadurch gekennzeichnet, dass** die Dauer der thermischen Behandlung zwischen 10 Minuten und 10 Stunden inklusive beträgt.

6. Verfahren nach Anspruch 1, **dadurch gekennzeichnet, dass** die jeweiligen Mengen von Vorläufer von Li und von V₂O₅-α im Reaktionsmilieu derart sind, dass:
- 0,16 mol.l⁻¹ < [Li] < 0,55 mol.l⁻¹
- 0,22 mol.l⁻¹ < [V₂O₅] < 0,75 mol.l⁻¹
- 1,15 < [V₂O₅]/[Li] < 1,5.

7. Verfahren nach Anspruch 1, **dadurch gekennzeichnet, dass** die Wasserstoffperoxidkonzentration in dem Reaktionsmilieu zwischen 10 Vol.-% und 50 Vol.-% inklusive beträgt.

8. Verbindung der Formel Li_{1+α}V₃Oₐ, (0,1 < α < 0,25), gebildet von Körnern in Nadelform, die eine bimodale Verteilung aufweisen und die eine Breite ℓ, eine Länge L und eine Dicke e haben, so dass:
- die Nadeln eines ersten Modus eine Länge L von 10 bis 50 µm haben,
- die Nadeln eines zweiten Modus eine Länge L von 1 bis 10 µm haben,
- 4 < L/ℓ < 100 und 4 < L/e < 100.

9. Positive Elektrode für Lithiumbatterie, **dadurch gekennzeichnet, dass** sie als aktives Material eine Verbindung Li_{1+α}V₃O₈ nach Anspruch 8 enthält.

10. Positive Elektrode nach Anspruch 9, **dadurch gekennzeichnet, dass** sie ferner enthält:
• ein Bindemittel, das mechanischen Halt verleiht,
• einen Werkstoff, der eine elektronische Leitung verleiht,
• eventuell eine Verbindung, die eine lonenleitung verleiht.

11. Positive Elektrode nach Anspruch 10, **dadurch gekennzeichnet, dass**:
- der Gehalt an aktivem Material zwischen 40 und 90 Ma% inklusive beträgt,
- der Gehalt an Bindemittel von 5 bis 15 Ma% beträgt,
- der Gehalt an Werkstoff, der eine elektronische Leitung verleiht, von 5 bis 20 Ma% beträgt,
- der Gehalt an Verbindung, die eine lonenleitung verleiht, unter 15 Ma% beträgt.

12. Positive Verbundelektrode nach Anspruch 10, **dadurch gekennzeichnet, dass** der Werkstoff, der eine elektronische Leitung verleiht, Carbonschwarz ist.

13. Elektrode nach Anspruch 10, **dadurch gekennzeichnet, dass** das Bindemittel von einem nicht solvatisierenden Polymer, einem solvatisierenden Polymer oder einem Gemisch der beiden gebildet ist.

14. Elektrode nach Anspruch 13, **dadurch gekennzeichnet, dass** das Bindemittel ferner eine aprotischen polare Verbindung enthält.

15. Elektrode nach Anspruch 10, **dadurch gekennzeichnet, dass** die Verbindung, die eine lonenleitung verleiht, ein Lithiumsalz ist, ausgewählt aus LiClO₄, LiPF₆, LiAsF₆, LiBF₄, LiR_{F}SO₃, LiCH₃SO₃, den Lithiumbisperfluoralkylsulfonimiden, den Lithiumbis- und den Lithiumtrisperfluorsulfonylmethiden.

16. Batterie, umfassend eine positive Elektrode und eine negative Elektrode, getrennt durch einen Elektrolyten, umfassend ein in einem Lösungsmittel gelöstes Lithiumsalz, **dadurch gekennzeichnet, dass** die positive Elektrode eine Elektrode nach einem der Ansprüche 9 bis 15 ist.

## Claims

1. A method for preparing a compound Li_{1+α}V₃O₈, (0.1 ≤ α ≤ 0.25) consisting of preparing a precursor gel, and then subjecting said gel to a heat treatment, **characterized in that** the precursor gel is prepared by simultaneously adding a precursor of lithium and the oxide V₂O₅-α to an aqueous solution of hydrogen peroxide, by letting hydrogen peroxide react with V₂O₅-α, and **in that** the heat treatment is carried out in an oxidizing atmosphere at a temperature between 260°C and 580°C.

2. The method according to claim 1, **characterized in that** the lithium precursor is selected from among LiOH.H₂O, LiCl, LiNO₃, or a lithium salt of a carboxylic acid.

3. The method according to claim 2, **characterized in that** the lithium carboxylic acid salt is selected from among lithium acetylacetonate, lithium acetate, lithium stearate, lithium formate, and lithium oxalate.

4. The method according to claim 1, **characterized in that** the lithium precursor is introduced as a powder in the reaction medium.

5. The method according to claim 1, **characterized in that** the period of the heat treatment is comprised between 10 mins and 10 hours.

6. The method according to claim 1, **characterized in that** the respective amounts of Li precursor and of V₂O₅-α in the reaction medium are such that:
- 0.16 mol.l⁻¹ < [Li] < 0.55 mol.l⁻¹
- 0.22 mol.l⁻¹ < [V₂O₅] < 0.75 mol.l⁻¹
- 1.15 < [V₂O₅] / [Li] < 1.5.

7. The method according to claim 1, **characterized in that** the concentration of hydrogen peroxide in the reaction medium is comprised between 10% and 50% by volume.

8. A compound of formula Li_{1+α}V₃O₈, (0.1 ≤ α ≤ 0.25) consisting of needle shape grains which have a bimodal distribution and which have a width *l*, a length L and a thickness e such that:
- the needles of a first mode have a length L from 10 to 50 µm,
- the needles of a second mode have a length L from 1 to 10 µm,
- 4<L/*l*<100 and 4<L/e<100.

9. A positive electrode for a lithium battery, **characterized in that** it contains as an active material, a compound Li_{1+α}V₃O₈ according to claim 8.

10. The positive electrode according to claim 9, **characterized in that** it further contains:
▪ a binder giving mechanical strength
▪ a material giving electron conduction
▪ optionally a compound giving ion conduction.

11. The positive electrode according to claim 10, **characterized in that**:
- the active material content is comprised between 40 and 90% by mass;
- the binder content is from 5 to 15% by mass;
- the content of the material giving ion conduction is less than 15% by mass.

12. The composite positive electrode according to claim 10, **characterized in that** the material giving electron conduction is a carbon black.

13. The electrode according to claim 10, **characterized in that** the binder consists of a non-solvating polymer, a solvating polymer, or a mixture of both.

14. The electrode according to claim 13, **characterized in that** the binder further contains an aprotic polar compound.

15. The electrode according to claim 10, **characterized in that** the compound giving ion conduction is a lithium salt, selected from among LiClO₄, LiPF₆, LiAsF₆, LiBF₄, LiR_{F}SO₃, LiCH₂SO₃, lithium bisperfluoroalkyl sulfonyl imides, lithium bis- and tris-perfluorosulfonyl methides.

16. A battery comprising a positive electrode and a negative electrode separated by an electrolyte comprising a lithium salt in solution in a solvent, **characterized in that** the positive electrode is an electrode according to one of claims 9 to 15.
